# FASCICULE DE BREVET EUROPEEN

(11) **EP 1 583 248 B1**
(45) Date de publication et mention de la délivrance du brevet: **24.01.2007**
(21) Numéro de dépôt: 04101369.9
(22) Date de dépôt: 02.04.2004
(51) Int. Cl.: H04B 1/16

(54) **Récepteur radiofréquence multibande avec dispostif de réduction de consommation d'énergie**
HF-Mehrbandempfänger mit Vorrichtung zur Reduzierung des Energieverbrauches
Multiband RF receiver with power consumption reduction device

(43) Date de publication de la demande: 05.10.2005
(73) Titulaire: CSEM Centre Suisse d'Electronique et de Microtechnique SA Recherche et Développement, 2007 Neuchâtel (CH)
(72) Inventeur: Leroux, Erwan, 2000 Neuchâtel (CH); Melly, Thierry, 1005, Lausanne (CH)
(74) Mandataire: Vigand, Philippe

(56) Documents cités:
- EP-A- 0 665 658
- US-A- 5 530 926
- US-A- 5 621 770

## Description

L'invention concerne un dispositif de réception de signaux de données radiofréquences. Le dispositif comprend au moins deux étages de conversion de fréquence pour convertir des signaux de données radiofréquences en des signaux intermédiaires de fréquence inférieure à la fréquence porteuse des signaux radiofréquences. Ces signaux intermédiaires sont fournis à une unité de sélection de canal qui délivre des signaux de données correspondants à une unité de traitement des signaux pour une démodulation desdits signaux de données. Un étage oscillateur du dispositif fournit des signaux oscillants aux étages de conversion de fréquence pour les opérations de conversion de fréquence. L'étage oscillateur fournit également un signal d'horloge à l'unité de traitement pour cadencer notamment les opérations de démodulation des signaux de données.

L'invention concerne également un procédé de mise en action du dispositif de réception de signaux de données radiofréquences.

Le dispositif de réception de signaux de données radiofréquences peut être utilisé par exemple dans des applications relatives à la domotique, c'est-à-dire pour de la surveillance d'ouverture ou de fermeture de portes d'un bâtiment ou pour la détection de présence ou de déplacement des personnes. Pour ce faire, on dispose plusieurs capteurs de mesure de divers paramètres en différents endroits du bâtiment à surveiller. Ces capteurs sont capables de transmettre une information à courte distance par des signaux radiofréquences à un dispositif de réception. A la survenance d'un événement, l'un des capteurs va transmettre une information simple au dispositif de réception, par exemple, un bit d'information modulé dans les signaux radiofréquences.

Dans un même espace restreint, plusieurs capteurs peuvent transmettre des signaux de données radiofréquences à capter par un ou plusieurs dispositifs de réception particuliers. De ce fait, il peut arriver que des signaux radiofréquences destinés à au moins un dispositif de réception spécifique soient captés par d'autres dispositifs de réception. Il peut donc survenir des collisions entre des signaux de données radiofréquences à capter lors de diverses communications de données.

Pour éviter de tels problèmes, il est connu d'utiliser différents canaux de transmission et réception des signaux radiofréquences. Le dispositif de réception peut ainsi comprendre différents canaux de réception fonctionnant en parallèle et l'un des canaux ayant la meilleure réception de signaux radiofréquences est alors sélectionné.

Comme le dispositif de réception de la présente invention possède sa propre source d'énergie, sa consommation en énergie électrique doit être faible pour garantir une autonomie suffisante du système. De ce fait, tous les éléments consommateurs d'énergie du dispositif de réception doivent si possible ne pas être enclenchés en permanence, en particulier lorsqu'aucune information utile ne peut être détectée. De plus, lors de la mise en fonction du dispositif, les diverses opérations de traitement des signaux reçus et de démodulation des données doivent être exécutées rapidement par économie d'énergie.

Un but de l'invention est donc de fournir un dispositif de réception de signaux de données radiofréquences capable de décider rapidement si une information utile est reçue et ayant, d'une part, une consommation électrique réduite et, d'autre part, un nombre de composants nécessaires au traitement des signaux reçus aussi petit que possible. La décision, relative à l'utilité de l'information transmise par les signaux radiofréquences, doit être faite avant les opérations de démodulation des données.

A cet effet, l'objet de l'invention concerne un dispositif de réception de signaux de données radiofréquences qui comprend les caractéristiques mentionnées dans la revendication 1.

Des formes d'exécution avantageuses du dispositif sont définies dans les revendications dépendantes 2 à 7.

Un avantage du dispositif de réception selon l'invention réside dans le fait que l'indicateur d'intensité des signaux est disposé dans une unité de sélection de canal qui précède l'unité de traitement des signaux dans laquelle des opérations de démodulation sont exécutées. De ce fait, une décision rapide quant à une information utile captée peut être prise avant d'entreprendre les longues étapes de démodulation dans l'unité de traitement des signaux.

Dans le cas où aucune information utile de signaux radiofréquences ne peut être détectée, les étages de conversion de fréquence sont momentanément placés dans un mode de repos. Ils sont réactivés à des intervalles de temps déterminés pour assurer une surveillance et pouvoir contrôler si des signaux de données utiles radiofréquences d'intensité suffisante sont captés. Ils peuvent être placés dans un mode de fonctionnement, par exemple toutes les secondes, sans pour autant nuire de manière excessive à la consommation électrique du dispositif.

En captant des signaux de données radiofréquences d'intensité suffisante dans au moins un des étages de conversion de fréquence, l'indicateur d'intensité peut contrôler si le niveau d'intensité est supérieur ou égal à un niveau d'intensité de référence. Ceci permet, par la suite, de choisir de maintenir uniquement un des deux étages de conversion de fréquence dans un mode de fonctionnement. L'étage de conversion sélectionné est celui dont le niveau d'intensité des signaux intermédiaires produits est le plus élevé afin de pouvoir démoduler par la suite les signaux de données dans l'unité de traitement des signaux.

Un autre avantage du dispositif de réception selon l'invention réside dans le fait que les deux étages de conversion de fréquence définissant chacun un canal de réception spécifique reçoivent des signaux de données radiofréquences à une fréquence porteuse différente. Etant donné que la première fréquence porteuse des signaux radiofréquences reçus par le premier étage de conversion de fréquence est bien différente de la seconde fréquence porteuse des signaux radiofréquences reçus par le second étage de conversion de fréquence, il n'y a pas de recouvrement de fréquence entre les canaux de réception. La première fréquence porteuse (par exemple, 434 MHz) est, de préférence, le double de la seconde fréquence porteuse (868 MHz).

Avec ces deux étages de conversion de fréquence, il est possible de sélectionner, grâce à l'indicateur d'intensité, le meilleur canal de réception quand les signaux intermédiaires ont un niveau d'intensité supérieur ou égal au niveau d'intensité de référence. De ce fait avec deux canaux de réception, la probabilité d'être brouillé est réduite. Ceci permet aussi de contourner le problème des collisions des signaux de données radiofréquences entre le dispositif spécifique de réception et d'autres dispositifs d'émission et réception en communication à proximité.

L'objet de l'invention concerne également le procédé de mise en action du dispositif de réception de signaux de données radiofréquences qui comprend les caractéristiques mentionnées dans la revendication 8.

Des étapes particulières du procédé sont définies dans les revendications dépendantes 9 et 10.

Un avantage du procédé de mise en action du dispositif de réception selon l'invention réside dans le fait qu'un contrôle d'intensité des signaux intermédiaires est réalisé rapidement avant des opérations de démodulation de signaux de données. Ceci permet d'économiser de l'énergie électrique dans le cas où aucune information utile n'est détectée par le dispositif en plaçant les étages de conversion de fréquence momentanément dans un mode de repos.

De préférence, après avoir contrôlé un niveau d'intensité supérieur ou égal au niveau d'intensité de référence lorsque les deux étages de conversion sont en fonction, un nouveau contrôle d'intensité est réalisé successivement pour chaque étage de conversion de fréquence. Ce second contrôle d'intensité permet de déterminer quel étage de conversion de fréquence fournit les signaux intermédiaires ayant la plus forte intensité de manière à sélectionner le canal de réception correspondant.

Les buts, avantages et caractéristiques du dispositif de réception de signaux de données radiofréquences, ainsi que de son procédé de mise en action, apparaîtront mieux dans la description suivante d'au moins une forme d'exécution illustrée par les dessins sur lesquels :
- la figure 1 représente de manière schématique un dispositif de réception de signaux de données radiofréquences selon l'invention,
- la figure 2 représente de manière schématique une partie d'émission de signaux radiofréquences complémentaires du dispositif de réception de signaux radiofréquences selon l'invention.

Dans la description suivante, les composants électroniques du dispositif de réception qui sont bien connus de l'homme du métier dans ce domaine technique ne seront décrits que de manière simplifiée. Pour plus de détails relatifs aux divers composants du dispositif de réception, le lecteur se reportera à l'enseignement tiré du livre de M. Behzad Razavi intitulé "RF Microelectronics", Prentice Hall, ISBN-0-13-887571-5.

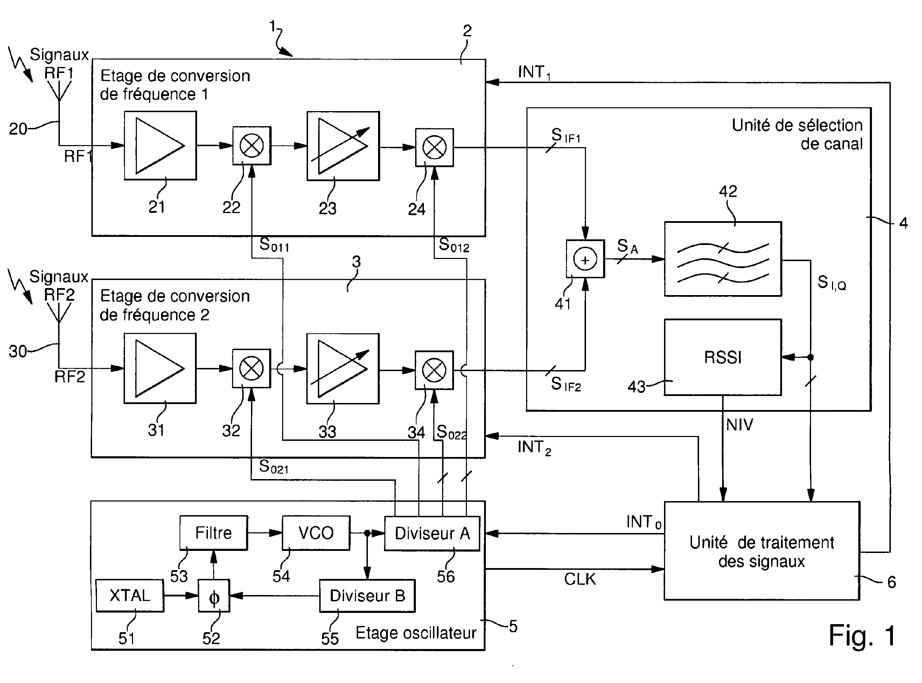

La figure 1 montre de manière générale les composants électroniques du dispositif de réception de signaux de données radiofréquences 1 selon l'invention. Ce dispositif peut être utilisé dans un appareil électronique à basse puissance, tel qu'un téléphone portable ou une montre ou un badge électronique par exemple, sans toutefois être limité à l'emploi uniquement dans un tel appareil. Il peut faire partie d'un système de surveillance pour recevoir des informations de capteurs disposés à plusieurs endroits d'un bâtiment à surveiller ou de capteurs portés par des utilisateurs afin de suivre leur déplacement ou contrôler leur présence dans le bâtiment.

Le dispositif 1 de réception de signaux de données radiofréquences comprend deux étages de conversion de fréquence 2 et 3, une unique unité de sélection de canal 4 reliée à chaque étage de conversion de fréquence, une unité de traitement des signaux 6 recevant des signaux de données de l'unité de sélection de canal 4, et un étage oscillateur 5. L'étage oscillateur 5 du dispositif génère des signaux oscillants S_{O11}, S_{O12}, S_{O21} et S_{O22} pour les opérations de conversion de fréquence de signaux radiofréquences reçus par les étages de conversion de fréquence. L'étage oscillateur génère également au moins un signal d'horloge CLK pour l'unité de traitement des signaux 6 pour cadencer notamment des opérations de démodulation des signaux de données.

Cet étage oscillateur 5 est composé de manière traditionnelle d'une unité à boucle à verrouillage de phase. Il comprend donc un oscillateur de référence à cristal de quartz XTAL 51, un détecteur de phase/fréquence Φ 52, un filtre passe-bas 53, un oscillateur commandé en tension VCO 54 (Voltage Controlled Oscillator en terminologie anglaise), un premier diviseur A 56 et un second diviseur B 55 dans la boucle. L'oscillateur de référence 51 produit un signal périodique de référence de l'ordre de 12 MHz, alors que l'oscillateur commandé en tension VCO 54 produit un signal haute fréquence de l'ordre de 772 MHz. Le diviseur A, qui reçoit le signal à haute fréquence de l'oscillateur commandé en tension 54, comprend plusieurs éléments de division de manière à produire les signaux oscillants S_{O11}, S_{O12}, S_{O21} et S_{O22}.

Dans un mode de réception, le premier étage de conversion de fréquence 2, qui définit un premier canal de réception, reçoit par une première antenne à filtre passe-bande 20 des signaux de données radiofréquences à une première fréquence porteuse RF1. Les signaux radiofréquences RF1 sont convertis dans le premier étage de conversion de fréquence afin de fournir des premiers signaux intermédiaires S_{IF1}, ayant une fréquence définie inférieure à la première fréquence porteuse RF1 à l'unité de sélection de canal 4.

Dans un mode de réception, le second étage de conversion de fréquence 3, qui définit un second canal de réception, reçoit par une seconde antenne à filtre passe-bande 30 des signaux de données radiofréquences à une seconde fréquence porteuse RF2 qui est différente de la première fréquence porteuse. Les signaux radiofréquences RF2 sont convertis dans le second étage de conversion de fréquence afin de fournir des seconds signaux intermédiaires S_{IF2}, ayant une fréquence définie inférieure à la seconde fréquence porteuse RF2, à l'unité de sélection de canal 4. La fréquence des premiers et seconds signaux intermédiaires S_{IF1} et S_{IF2} est égale de manière à pouvoir être traitée par une unique unité de sélection de canal.

De préférence, la valeur de la seconde fréquence porteuse des signaux radiofréquences RF2 peut être le double de la valeur de la première fréquence porteuse des signaux radiofréquences RF1. La première fréquence porteuse peut être égale, par exemple, à 434 MHz, alors que la seconde fréquence porteuse peut être égale à 868 MHz sans pour autant être limité à ces valeurs de fréquence.

Avec une différence aussi importante entre les deux fréquences porteuses de signaux radiofréquences RF1 et RF2 susceptibles d'être captés par les antennes 20 et 30, il n'y ainsi aucun recouvrement de fréquence des deux canaux de réception. Par ailleurs, la largeur de bande du premier canal peut être de l'ordre de 600 kHz, alors que la largeur de bande du second canal peut être de l'ordre de 200 kHz. De ce fait, il est possible de sélectionner l'un ou l'autre canal de réception pour une meilleure réception de signaux de données radiofréquences.

Pour la conversion de fréquence des signaux radiofréquences RF1, le premier étage de conversion de fréquence 2 comprend, connectés en série, un élément d'amplification faible bruit à filtre 21, qui reçoit les signaux radiofréquences RF1, un premier bloc mélangeur 22, un élément amplificateur à gain variable 23 et un second bloc mélangeur 24. Avec les deux blocs mélangeurs 22 et 24, est opérée une double conversion de fréquence des signaux radiofréquences RF1 afin de fournir les premiers signaux intermédiaires S_{IF1} à l'unité de sélection de canal 4.

Le premier bloc mélangeur 22 du type différentiel permet de ramener la fréquence porteuse des signaux radiofréquences RF1 autour de 48 MHz à l'aide du premier signal oscillant S_{O11} de fréquence proche de 386 MHz. Ce signal oscillant S_{O11} est fourni par le diviseur A 56 suite à une division par 2 du signal haute fréquence produit par l'oscillateur commandé en tension 54. Le second bloc mélangeur 24 du type différentiel permet finalement de ramener la fréquence porteuse proche de 0 grâce aux seconds signaux oscillants S_{O12} de fréquence proche de 48 MHz. Ces seconds signaux oscillants S_{O12} sont fournis par le diviseur A 56 suite à une division par 16 du signal haute fréquence de l'oscillateur 54. De ce fait, le spectre de fréquences des données des premiers signaux intermédiaires se situe après conversion de préférence proche de 0.

Le second bloc mélangeur 24 comprend de préférence deux mélangeurs pour, d'une part, fournir des signaux intermédiaires en phase et, d'autre part, des signaux intermédiaires en quadrature grâce à deux signaux oscillants en phase et en quadrature S_{O12} bien connus. Ces signaux oscillants S_{O12} et les premiers signaux intermédiaires S_{IF1} sont ainsi indiqués sur le dessin par une ligne coupée d'une barre oblique définissant un bus de signaux.

Pour la conversion de fréquence des signaux radiofréquences RF2, le second étage de conversion de fréquence 3 comprend, connectés en série, un élément d'amplification faible bruit à filtre 31, qui reçoit les signaux radiofréquences RF2, un premier bloc mélangeur 32, un élément amplificateur à gain variable 33 et un second bloc mélangeur 34. Avec les deux blocs mélangeurs 32 et 34, est opérée une double conversion de fréquence des signaux radiofréquences RF2 afin de fournir les seconds signaux intermédiaires S_{IF2} à l'unité de sélection de canal 4.

Le premier bloc mélangeur 32 du type différentiel permet de ramener la fréquence porteuse des signaux radiofréquences RF2 autour de 96 MHz à l'aide du premier signal oscillant S_{O21} de fréquence proche de 772 MHz. Ce signal oscillant S_{O21} correspond au signal haute fréquence fourni par l'oscillateur commandé en tension 54. Le second bloc mélangeur 34 du type différentiel permet finalement de ramener la fréquence porteuse proche de 0 grâce aux seconds signaux oscillants S_{O22} de fréquence proche de 96 MHz. Ces seconds signaux oscillants S_{O22} sont fournis par le diviseur A 56 suite à une division par 8 du signal haute fréquence de l'oscillateur 54. De ce fait, le spectre de fréquences des données des seconds signaux intermédiaires se situe après conversion de préférence proche de 0.

Le second bloc mélangeur 34 comprend de préférence deux mélangeurs pour, d'une part, fournir des signaux intermédiaires en phase et, d'autre part, des signaux intermédiaires en quadrature grâce à deux signaux oscillants en phase et en quadrature S_{O22} bien connus. Ces signaux oscillants S_{O22} et les seconds signaux intermédiaires S_{IF2} sont ainsi indiqués sur le dessin par une ligne coupée d'une barre oblique définissant un bus de signaux.

L'unité de sélection de canal 4, qui comprend les éléments essentiels du dispositif de réception selon l'invention, comprend un élément additionneur 41, afin d'additionner les premiers et seconds signaux intermédiaires fournis par les étages de conversion de fréquence, et un indicateur d'intensité de signaux RSSI 43 (Received Signal Strength Indicator en terminologie anglaise). Un filtre passe-bande 42 est placé en sortie de l'élément additionneur 41 afin de filtrer les signaux intermédiaires additionnés S_{A} et ainsi fournir des signaux de données filtrés S_{I,Q} au bloc RSSI et à l'unité de traitement des signaux 6 pour des opérations de démodulation des signaux de données.

Les signaux intermédiaires additionnés S_{A} tout comme les signaux de données filtrés S_{I,Q} sont également constitués par des signaux en phase et en quadrature. Ils sont représentés sur la figure 1 par une ligne coupée d'une barre oblique définissant un bus de signaux.

L'indicateur d'intensité 43 effectue un contrôle de l'intensité des signaux intermédiaires après leur filtrage par le filtre 42 et fournit une valeur du niveau d'intensité contrôlé NIV à l'unité de traitement des signaux de manière à réaliser, dans l'unité de traitement 6, une comparaison avec un niveau d'intensité de référence déterminé mémorisé dans l'unité de traitement 6.

Si le niveau d'intensité des signaux intermédiaires filtrés S_{I,Q} est inférieur à un niveau d'intensité de référence, l'unité de traitement des signaux 6 fournit un signal de commande INT₁ au premier étage de conversion de fréquence et un signal de commande INT₂ au second étage de conversion de fréquence afin de les placer momentanément dans un mode de repos. Les deux étages de conversion de fréquence sont maintenus dans ce mode de repos par exemple pendant une période de temps de l'ordre de 1 seconde avant d'être à nouveau placés dans un mode de fonctionnement. Ceci permet au dispositif de surveiller si des signaux de données utiles radiofréquences peuvent être captés avec une intensité suffisante, même si dans la majeure partie du temps par exemple 99% du temps, le dispositif de réception est enclenché sans réception de signaux de données utiles radiofréquences.

Selon l'invention, il a été constaté qu'il était préférable d'enclencher les deux étages de conversion de fréquence en même temps plutôt que successivement.

Si le niveau d'intensité des signaux intermédiaires additionnés S_{A} contrôlé par l'indicateur d'intensité 43 est supérieur ou égal au niveau d'intensité de référence, une sélection du meilleur canal de réception doit être réalisée. Pour ce faire, un second contrôle d'intensité doit être réalisé par l'indicateur d'intensité 43 d'une part pour les signaux intermédiaires S_{IF1} fournis par le premier étage de conversion de fréquence 2, et d'autre part pour les signaux intermédiaires S_{IF2} fournis par le second étage de conversion de fréquence 3.

L'unité de traitement des signaux 6 va donc fournir un signal de commande INT₁ au premier étage de conversion de fréquence différent du signal de commande INT₂ fourni au second étage de conversion de fréquence. De cette manière, le premier étage de conversion de fréquence est placé tout d'abord dans le mode de fonctionnement, alors que le second étage de conversion de fréquence est placé dans le mode de repos jusqu'à ce que le contrôle du niveau d'intensité des premiers signaux intermédiaires S_{IF1} ait été effectué. Ensuite de quoi, le second étage de conversion de fréquence est placé dans le mode de fonctionnement, alors que le premier étage de conversion de fréquence est placé dans le mode de repos jusqu'à ce que le contrôle du niveau d'intensité des seconds signaux intermédiaires S_{IF2} ait été effectué.

Sur la base du niveau contrôlé des premiers et seconds signaux intermédiaires, l'unité de traitement 6 va permettre de sélectionner l'étage de conversion de fréquence 2 ou 3 qui a produit des signaux intermédiaires de plus forte intensité en plaçant l'autre étage de conversion de fréquence dans le mode de repos. L'étage de conversion de fréquence en fonction va donc produire des signaux intermédiaires à l'unité de sélection de canal 4 qui va filtrer les signaux intermédiaires et fournir des signaux de données S_{I,Q} à l'unité de traitement des signaux 6. L'unité de traitement des signaux peut ainsi réaliser les opérations de démodulation des données grâce au signal d'horloge CLK produit par l'étage oscillateur 5.

Il est à noter que pour le second contrôle du niveau d'intensité, les signaux intermédiaires fournis par le second étage de conversion de fréquence peuvent être contrôlés avant les signaux intermédiaires fournis par le premier étage de conversion de fréquence.

Même avec un double contrôle du niveau d'intensité des signaux intermédiaires, la consommation d'énergie du dispositif reste faible, car le dispositif n'est susceptible de capter des signaux de données utiles radiofréquences qu'épisodiquement. Ce n'est que dans approximativement 1% du temps de fonctionnement du dispositif que le niveau d'intensité contrôlé par l'indicateur d'intensité est supérieur au niveau d'intensité de référence.

Grâce à ce contrôle du niveau d'intensité réalisé dans l'unité de sélection de canal 4 par l'indicateur d'intensité 43, une décision rapide peut être prise quant à savoir si des signaux de données utiles radiofréquences ont été captés par au moins une antenne à filtre passe-bande 20 ou 30. Avec cette décision rapide, une économie d'énergie peut être réalisée ce qui est un but de la présente invention étant donné que, de préférence, le dispositif de réception est alimenté par une source d'énergie telle qu'une pile ou un accumulateur.

Il est à noter que, pour placer l'un ou l'autre des étages de conversion de fréquence dans un mode de repos, l'unité de traitement de signaux peut également fournir un signal de commande INT₀ à l'étage oscillateur. De ce fait, cela permet d'interrompre momentanément certains signaux oscillants fournis à l'un ou l'autre étage de conversion de fréquence.

De préférence, tous les composants du dispositif de réception de signaux radiofréquences 1 sont intégrés dans un unique circuit intégré à substrat semi-conducteur. Le circuit intégré peut être réalisé par exemple dans une technologie CMOS à 0,18 µm, et fonctionner à une tension d'alimentation comprise entre 0,9 et 1,5 V. De ce fait, avec une unique unité de sélection de canal 4, un gain de place important peut être réalisé.

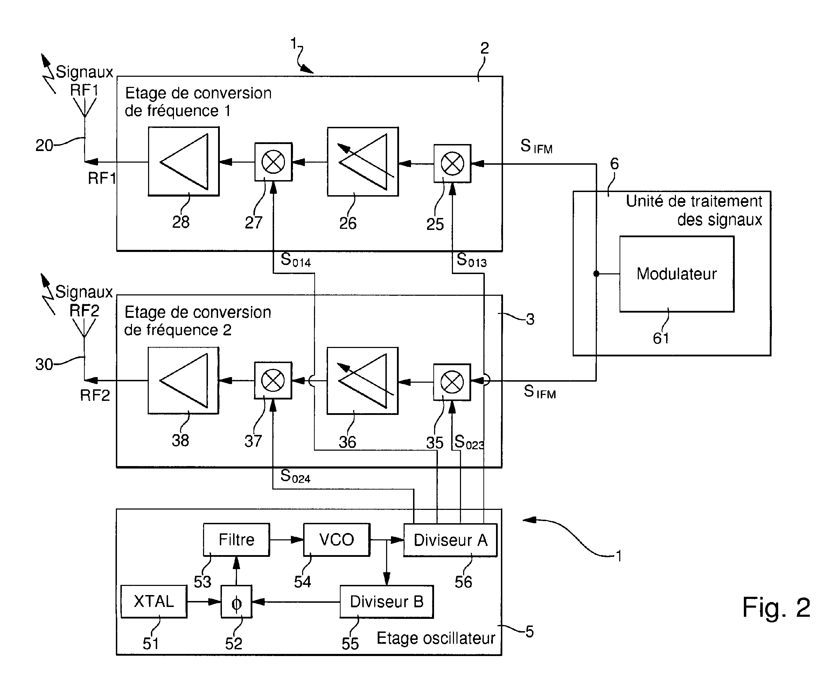

La figure 2 montre de manière schématique une partie complémentaire d'émission de signaux radiofréquences du dispositif de réception de signaux radiofréquences selon l'invention. Il est à noter que les éléments de la figure 2, qui correspondent à ceux de la figure 1, portent des signes de référence identiques. De ce fait par simplification, il ne sera pas répété la description de ces éléments.

L'unité de traitement des signaux 6 comprend un modulateur 61 bien connu qui fournit des signaux intermédiaires modulés identiques S_{IFM} (signaux de données en bande de base) aux premier et second étages de conversion de fréquence 2 et 3 dans un mode d'émission du dispositif. Dans ce mode d'émission, une élévation de fréquence des signaux intermédiaires modulés S_{IFM} est réalisée simultanément dans les deux étages de conversion de fréquence. Le premier étage de conversion de fréquence va produire des signaux de données radiofréquences RF1 sur une première fréquence porteuse à transmettre par l'antenne 20, alors que le second étage de conversion de fréquence va produire des signaux de données radiofréquences RF2 sur une seconde fréquence porteuse à transmettre par l'antenne 30.

Pour ce faire, le premier étage de conversion de fréquence comprend connectés en série entre l'unité de traitement de signaux 6 et l'antenne 20, un premier bloc mélangeur 25, un élément amplificateur à gain variable 26, un second bloc mélangeur 27 et un élément d'amplification faible bruit à filtre 28. De même le second étage de conversion de fréquence comprend connectés en série entre l'unité de traitement de signaux 6 et l'antenne 30, un premier bloc mélangeur 35, un élément amplificateur à gain variable 36, un second bloc mélangeur 37 et un élément d'amplification faible bruit à filtre 38. Des signaux oscillants S_{O13}, S_{O14}, S_{O23} et S_{O24} pour les opérations de conversion de fréquence sont fournis aux blocs mélangeurs de chaque étage de conversion de fréquence par l'étage oscillateur 5.

Il est à noter que dans le mode d'émission, il peut être imaginé de disposer d'éléments interrupteurs non représentés commandés par l'unité de traitement des signaux 6 pour pouvoir utiliser les mêmes éléments de chacun des étages de conversion de fréquence du mode de réception.

A partir de la description qui vient d'être faite, de multiples variantes de réalisation du dispositif de réception et d'émission peuvent être conçues par l'homme du métier sans sortir du cadre de l'invention définie par les revendications. Il peut être réalisé une unique conversion de fréquence dans chaque étage de conversion de fréquence afin de fournir des signaux intermédiaires à l'unité de sélection de canal. De plus, le nombre d'étages de conversion de fréquence peut être plus grand que deux, tout en conservant une unique unité de sélection de canal. Avec plusieurs étages de conversion de fréquence la diversité spectrale est plus grande, ce qui permet d'opérer une meilleure sélection d'un canal de réception pour éviter des collisions avec d'éventuels autres signaux radiofréquences.

## Revendications

1. Dispositif (1) de réception de signaux de données radiofréquences, le dispositif comprenant :
- au moins deux étages de conversion de fréquence (2, 3) pour convertir, dans un mode de réception, des signaux de données radiofréquences reçus (RF1, RF2) en des signaux intermédiaires (S_{IF1}, S_{IF2}) de fréquence inférieure à la fréquence porteuse des signaux radiofréquences,
- une unité de sélection de canal (4) pour recevoir les signaux intermédiaires des deux étages de conversion de fréquence et fournir des signaux de données (S_{I,Q}) correspondant aux signaux intermédiaires,
- une unité de traitement des signaux (6) capable de démoduler les signaux de données fournis par l'unité de sélection de canal, et
- un étage oscillateur (5) fournissant au moins un premier signal oscillant (S_{O11}, S_{O12}) au premier étage de conversion de fréquence et au moins un second signal oscillant (S_{O21}, S_{O22}) au second étage de conversion de fréquence pour des opérations de conversion de fréquence de signaux radiofréquences reçus, et un signal d'horloge (CLK) à l'unité de traitement pour cadencer notamment des opérations de démodulation des signaux de données,
le dispositif étant **caractérisé en ce que** l'étage oscillateur est configuré pour fournir des premier et second signaux oscillants de fréquence différente dans un mode de réception pour que le premier étage de conversion de fréquence puisse convertir des signaux de données radiofréquences reçus sur une première fréquence porteuse, dans un premier canal de réception, en des premiers signaux intermédiaires ayant une fréquence définie, et que le second étage de conversion de fréquence puisse convertir des signaux radiofréquences reçus sur une seconde fréquence porteuse différente de la première fréquence porteuse, dans un second canal de réception, en des seconds signaux intermédiaires ayant une même fréquence définie que les premiers signaux intermédiaires, et
**en ce que** l'unique unité de sélection de canal (4) comprend un élément additionneur (41) pour additionner les premiers et seconds signaux intermédiaires, et un indicateur d'intensité de signaux (43) contrôlant un niveau d'intensité des signaux intermédiaires pour placer les étages de conversion de fréquence dans un mode de repos momentané si le niveau d'intensité contrôlé est inférieur à un niveau d'intensité de référence, ou pour sélectionner un des étages de conversion de fréquence à placer ou maintenir dans un mode de fonctionnement, si le niveau d'intensité contrôlé est supérieur ou égal au niveau d'intensité de référence afin de permettre une démodulation des signaux de données dans l'unité de traitement.

2. Dispositif de réception selon la revendication 1, **caractérisé en ce que** l'indicateur d'intensité contrôle le niveau d'intensité des signaux intermédiaires additionnés et filtrés (S_{I,Q}) afin de fournir une indication du niveau d'intensité contrôlé (NIV) à l'unité de traitement des signaux, et **en ce que** l'unité de traitement des signaux fournit un premier signal de commande (INT₁) au premier étage de conversion de fréquence et un second signal de commande (INT₂) au second étage de conversion de fréquence pour placer ou maintenir le premier étage de conversion et/ou le second étage de conversion dans un mode de fonctionnement ou dans un mode de repos sur la base du résultat de la comparaison entre le niveau d'intensité contrôlé et le niveau d'intensité de référence.

3. Dispositif de réception selon la revendication 1, **caractérisé en ce que** l'étage oscillateur fournit deux premiers signaux oscillants (S_{O11}, S_{O12}) de fréquence différente à respectivement deux blocs mélangeurs de signaux (22, 24) dans le premier étage de conversion de fréquence et deux seconds signaux oscillants (S_{O21}, S_{O22}) de fréquence différente à respectivement deux blocs mélangeurs de signaux (32, 34) dans le second étage de conversion de fréquence de manière à opérer une double conversion de fréquence des signaux radiofréquences reçus dans chaque étage de conversion de fréquence et fournir des premiers et seconds signaux intermédiaires à basse fréquence ou sans fréquence porteuse.

4. Dispositif de réception selon la revendication 1, **caractérisé en ce qu'**il comprend une première antenne à filtre passe-bande (20) reliée au premier étage de conversion de fréquence pour capter des signaux radiofréquences d'une première fréquence porteuse d'un premier canal de réception, et une seconde antenne à filtre passe-bande (30) reliée au second étage de conversion de fréquence pour capter des signaux radiofréquences d'une seconde fréquence porteuse d'un second canal de réception sans recouvrement de fréquence avec le premier canal de réception.

5. Dispositif de réception selon la revendication 4, **caractérisé en ce que** les première et seconde antennes sont configurées de manière à capter respectivement des signaux radiofréquences d'une première fréquence porteuse et des signaux radiofréquences d'une seconde fréquence porteuse de valeur double de la première fréquence porteuse, la première fréquence porteuse étant de préférence égale à 434 MHz, alors que la seconde fréquence porteuse étant de préférence égale à 868 MHz.

6. Dispositif de réception et d'émission de signaux de données radiofréquences selon la revendication 4, **caractérisé en ce que** l'unité de traitement de signaux comprend un unique modulateur (61) de signaux de données en bande de base, qui sont fournis à chaque étage de conversion de fréquence dans un mode d'émission du dispositif, et **en ce que** l'étage oscillateur (5) fournit dans le mode d'émission au moins un troisième signal oscillant (S_{O13}, S_{O14}) au premier étage de conversion de fréquence et au moins un quatrième signal oscillant (S_{O23}, S_{O24}) au second étage de conversion de fréquence pour élever la fréquence des signaux de données afin de transmettre des signaux radiofréquences à une première fréquence (RF1) par la première antenne et des signaux radiofréquences à une seconde fréquence (RF2) par la seconde antenne.

7. Dispositif de réception selon la revendication 1, **caractérisé en ce que** tous les composants du dispositif sont intégrés dans un unique circuit intégré à substrat semi-conducteur.

8. Procédé de mise en action du dispositif de réception selon la revendication 1, **caractérisé en ce que** le procédé comprend une série d'étapes consistant à :
a) enclencher les deux étages de conversion de fréquence (2, 3) pour que le premier étage de conversion puisse convertir des signaux de données radiofréquences d'une première fréquence porteuse (RF1) en des premiers signaux intermédiaires (S_{IF1}), et pour que le second étage de conversion puisse convertir des signaux de données radiofréquences d'une seconde fréquence porteuse (RF2) différente de la première fréquence porteuse en des seconds signaux intermédiaires (S_{IF2}) de fréquence équivalente aux premiers signaux intermédiaires,
b) additionner, dans un élément additionneur (41) de l'unique unité de sélection de canal, les premiers et seconds signaux intermédiaires fournis par les premier et second étages de conversion de fréquence,
c) contrôler le niveau d'intensité des signaux intermédiaires par un indicateur d'intensité de signaux, et
d) placer les deux étages de conversion de fréquence dans un mode de repos momentané, si le niveau d'intensité contrôlé est inférieur à un niveau d'intensité de référence, ou
e) sélectionner un des étages de conversion de fréquence à placer ou maintenir dans un mode de fonctionnement, si le niveau d'intensité contrôlé est supérieur ou égal au niveau d'intensité de référence afin de permettre une démodulation, dans l'unité de traitement, des signaux de données fournis par l'unité de sélection de canal.

9. Procédé selon la revendication 8, **caractérisé en ce que** les étapes a) à d) sont répétées automatiquement et de manière successive à des intervalles de temps déterminés jusqu'à ce que le niveau d'intensité contrôlé en sortie de l'additionneur par l'indicateur d'intensité soit égal ou supérieur au niveau d'intensité de référence.

10. Procédé selon la revendication 8, **caractérisé en ce qu'**entre l'étape c) et l'étape e) dans le cas où le premier contrôle du niveau d'intensité par l'indicateur d'intensité est égal ou supérieur au niveau d'intensité de référence, les premier et second étages de conversion de fréquence sont enclenchés successivement pour que l'indicateur d'intensité effectue un second contrôle du niveau d'intensité des premiers et seconds signaux intermédiaires séparément en sortie de l'élément additionneur de manière à permettre à l'unité de traitement de sélectionner l'étage de conversion de fréquence ayant produit des signaux intermédiaires de plus forte intensité.

## Claims

1. Radiofrequency data signal reception device (1), the device including:
- at least two frequency conversion stages (2, 3) for converting, in reception mode, received radiofrequency data signals (RF1, RF2) into intermediate signals (S_{IF1}, S_{IF2}) of a lower frequency than the radiofrequency signal carrier frequency,
- a channel selection unit (4) for receiving the intermediate signals from the two frequency conversion stages and providing data signals (S_{l,Q}) corresponding to the intermediate signals,
- a signal processing unit (6) capable of demodulating the data signals provided by the channel selection unit, and
- an oscillator stage (5) providing at least a first oscillating signal (S_{O11}, S_{O12}) to the first frequency conversion stage and at least a second oscillating signal (S_{O21}, S_{O22}) to the second frequency conversion stage for the received radiofrequency signal frequency conversion operations, and a clock signal (CLK) to the processing unit for clocking particularly data signal demodulating operations,
the device being **characterized in that** the oscillator stage is configured to provide first and second oscillating signals of different frequencies in a reception mode so that the first frequency conversion stage can convert radiofrequency data signals received on a first carrier frequency, in a first reception channel, into first intermediate signals having a defined frequency, and so that the second frequency conversion stage can convert radiofrequency signals received on a second carrier frequency different from the first carrier frequency, in a second reception channel, into second intermediate signals, having the same defined frequency as the first intermediate signals, and
**in that** the single channel selection unit (4) includes an adder element (41) for adding the first and second intermediate signals, and a signal intensity indicator (43) checking the intensity level of the intermediate signals to place the frequency conversion stages into a momentary rest mode if the checked intensity level is less than a reference intensity level, or to select one of the frequency conversion stages to be placed or kept in operating mode, if the checked intensity level is higher than or equal to the reference intensity level in order to allow demodulation of the data signals in the processing unit.

2. Reception device according to claim 1, **characterized in that** the intensity indicator checks the intensity level of the added and filtered intermediate signals (S_{I,Q}) in order to provide an indication of the checked intensity level (NIV) to the signal processing unit, and **in that** the signal processing unit provides a first control signal (INT₁) to the first frequency conversion stage and a second control signal (INT₂) to the second frequency conversion stage to place or keep the first conversion stage and/or the second conversion stage in operating mode or in rest mode on the basis of the result of the comparison between the checked intensity level and the reference intensity level.

3. Reception device according to claim 1, **characterized in that** the oscillator stage provides two first oscillating signals (S_{O11}, S_{O12}) of different frequencies respectively to two signal mixer blocks (22, 24) in the first frequency conversion stage and two second oscillating signals (S_{O21}, S_{O22}) of different frequencies respectively to two signal mixer blocks (32, 34) in the second frequency conversion stage so as to carry out a double frequency conversion of the radiofrequency signals received in each frequency conversion stage and to provide first and second intermediate signals at a low frequency or without any carrier frequency.

4. Reception device according to claim 1, **characterized in that** it includes a first bandpass filter antenna (20) connected to the first frequency conversion stage to pick up radiofrequency signals with a first carrier frequency from a first reception channel and a second bandpass filter antenna (30) connected to the second frequency conversion stage to pick up radiofrequency signals with a second carrier frequency from a second reception channel without any frequency overlap with the first reception channel.

5. Reception device according to claim 4, **characterized in that** the first and second antennae are configured to pick up respectively radiofrequency signals with a first carrier frequency and radiofrequency signals with a second carrier frequency of twice the value of the first carrier frequency, the first carrier frequency preferably being equal to 434 MHz, whereas the second carrier frequency is preferably equal to 868 MHz.

6. Radiofrequency data signal reception and transmission device according to claim 4, **characterized in that** the signal processing unit includes a single base band modulator (61) for data signals, which are provided to each frequency conversion stage in a transmission mode of the device, and **in that**, in transmission mode, the oscillator stage (5) provides at least a third oscillating signal (S_{O13}, S_{O13}) to the first frequency conversion stage and at least a fourth oscillating signal (S_{O23} S_{O24}) to the second frequency conversion stage to raise the frequency of the data signals in order to transmit radiofrequency signals at a first frequency (RF1) via the first antenna and radiofrequency signals at a second frequency (RF2) via the second antenna.

7. Reception device according to claim 1, **characterized in that** all of the components of the device are integrated in a single semiconductor substrate integrated circuit.

8. Method for implementing the reception device according to claim 1, **characterized in that** the method includes a series of steps consisting in:
a) switching on the two frequency conversion stages (2, 3) so that the first conversion stage can convert radiofrequency data signals with a first carrier frequency (RF1) into first intermediate signals (S_{IF1}), and so that the second conversion stage can convert radiofrequency data signals with a second carrier frequency (RF2) different from the first carrier frequency into second intermediate signals (S_{IF2}) with an equivalent frequency to the first intermediate signals,
b) adding, in an adder element (41) of the single channel selection unit, the first and second intermediate signals provided by the first and second frequency conversion stages,
c) checking the intensity level of the intermediate signals via a signal intensity indicator, and
d) placing the two frequency conversion stages into a momentary rest mode if the checked intensity level is lower than a reference intensity level, or
e) selecting one of the frequency conversion stages to be placed or kept in operating mode, if the checked intensity level is higher than or equal to the reference intensity level in order to allow demodulation, in the processing unit, of the data signals provided by the channel selection unit.

9. Method according to claim 8, **characterized in that** steps a) to d) are repeated automatically and successively at determined intervals of time until the intensity level checked at the output of the adder by the intensity indicator is equal to or higher than the reference intensity level.

10. Method according to claim 8, **characterized in that** between step c) and step e) in the case where the first intensity level check by the intensity indicator is equal to or higher than the reference intensity level, the first and second frequency conversion stages are switched on in succession so that the intensity indicator carries out a second check of the intensity level of the first and second intermediate signals separately at the output of the adder element so as to allow the processing unit to select the frequency conversion stage that was able to produce intermediate signals of the highest intensity.

## Patentansprüche

1. Vorrichtung (1) zum Empfangen von Hochfrequenz-Datensignalen, wobei die Vorrichtung umfasst:
- wenigstens zwei Frequenzumsetzungsstufen (2, 3), um in einer Empfangsbetriebsart empfangene Hochfrequenz-Datensignale (RF1, RF2) in Zwischensignale (S_{1F1}, S_{1F2}) mit einer Frequenz, die niedriger als die Trägerfrequenz der Hochfrequenzsignale ist, umzusetzen,
- eine Kanalauswahleinheit (4) zum Empfangen der Zwischensignale der zwei Frequenzumsetzungsstufen und zum Liefern von den Zwischensignalen entsprechenden Datensignalen (S_{I,Q}),
- eine Signalverarbeitungseinheit (6), die die von der Kanalauswahleinheit gelieferten Datensignale demodulieren kann, und
- eine Oszillatorstufe (5), die wenigstens ein erstes oszillierendes Signal (S_{O11}, S_{O12}) an die erste Frequenzumsetzungsstufe liefert und wenigstens ein zweites oszillierendes Signal (S_{O21}, S_{O22}) an die zweite Frequenzumsetzungsstufe liefert, um Frequenzumsetzungsoperationen an den empfangenen Hochfrequenzsignalen auszuführen, und ein Taktsignal (CLK) an die Verarbeitungseinheit liefert, um insbesondere die Operationen zur Demodulation der Datensignale zu takten,
- wobei die Vorrichtung **dadurch gekennzeichnet ist, dass** die Oszillatorstufe konfiguriert ist, um in einer Empfangsbetriebsart erste und zweite oszillierende Signale mit unterschiedlicher Frequenz zu liefern, damit die erste Frequenzumsetzungsstufe Hochfrequenz-Datensignale, die auf einer ersten Trägerfrequenz in einem ersten Empfangskanal empfangen werden, in erste Zwischensignale, die eine definierte Frequenz besitzen, umsetzen kann und die zweite Frequenzumsetzungsstufe Hochfrequenzsignale, die auf einer von der ersten Trägerfrequenz verschiedenen zweiten Trägerfrequenz in einem zweiten Empfangskanal empfangen werden, in zweite Zwischensignale, die dieselbe definierte Frequenz wie die ersten Zwischensignale besitzen, umsetzen kann, und
dass die einzige Kanalauswahleinheit (4) ein Addiererelement (41) zum Addieren der ersten und zweiten Zwischensignale und einen Signalstärkenindikator (43), der ein Stärkeniveau der Zwischensignale steuert, um die Frequenzumsetzungsstufen in eine momentane Antwortbetriebsart zu versetzen, falls das gesteuerte Intensitätsniveau niedriger als ein Referenzintensitätsniveau ist, oder um eine der Frequenzumsetzungsstufen, die in eine Arbeitsbetriebsart zu versetzen oder in ihr zu halten ist, auszuwählen, falls das gesteuerte Intensitätsniveau größer oder gleich dem Referenzintensitätsniveau ist, um eine Demodulation der Datensignale in der Verarbeitungseinheit zu ermöglichen, umfasst.

2. Empfangsvorrichtung nach Anspruch 1, **dadurch gekennzeichnet, dass** der Intensitätsindikator das Intensitätsniveau der addierten und gefilterten Zwischensignale (S_{I,Q}) steuert, um eine Angabe des gesteuerten Intensitätsniveaus (NIV) an die Signalverarbeitungseinheit zu liefern, und dass die Signalverarbeitungseinheit ein erstes Steuersignal (INT₁) an die erste Frequenzumsetzungsstufe liefert und ein zweites Steuersignal (INT₂) an die zweite Frequenzumsetzungsstufe liefert, um auf der Grundlage des Ergebnisses des Vergleichs zwischen dem gesteuerten Intensitätsniveau und dem Referenzintensitätsniveau die erste Umsetzungsstufe und/oder die zweite Umsetzungsstufe in eine Arbeitsbetriebsart oder in eine Ruhebetriebsart zu versetzen oder in ihr zu halten.

3. Empfangsvorrichtung nach Anspruch 1, **dadurch gekennzeichnet, dass** die Oszillatorstufe zwei erste oszillierende Signale (S_{O11}, S_{O12}) mit unterschiedlicher Frequenz an jeweils einen von zwei Signalmischerblöcken (22, 24) in der ersten Frequenzumsetzungsstufe liefert und zwei zweite oszillierende Signale (S_{O21}, S_{O22}) mit unterschiedlicher Frequenz an jeweils einen von zwei Signalmischerblöcken (32, 34) in der zweiten Frequenzumsetzungsstufe liefert, derart, dass mit einer doppelten Frequenzumsetzung der empfangenen Hochfrequenzsignale in jeder Frequenzumsetzungsstufe gearbeitet wird und erste und zweite Zwischensignale mit niedriger Frequenz oder ohne Trägerfrequenz geliefert werden.

4. Empfangsvorrichtung nach Anspruch 1, **dadurch gekennzeichnet, dass** sie eine erste Antenne (20) mit Bandpassfilter, die mit der ersten Frequenzumsetzungsstufe verbunden ist, um Hochfrequenzsignale einer ersten Trägerfrequenz von einem ersten Empfangskanal zu empfangen, und eine zweite Antenne (30) mit Bandpassfilter, die mit der zweiten Frequenzumsetzungsstufe verbunden ist, um Hochfrequenzsignale mit einer zweiten Trägerfrequenz von einem zweiten Empfangskanal ohne Frequenzüberdeckung mit dem ersten Empfangskanal zu empfangen, umfasst.

5. Empfangsvorrichtung nach Anspruch 4, **dadurch gekennzeichnet, dass** die erste und die zweite Antenne so konfiguriert sind, dass sie Hochfrequenzsignale einer ersten Trägerfrequenz bzw. Hochfrequenzsignale einer zweiten Trägerfrequenz, die den doppelten Wert der ersten Trägerfrequenz hat, empfangen, wobei die erste Trägerfrequenz vorzugsweise gleich 434 MHz beträgt, während die zweite Trägerfrequenz vorzugsweise 868 MHz beträgt.

6. Vorrichtung zum Empfangen und Senden von Hochfrequenz-Datensignalen nach Anspruch 4, **dadurch gekennzeichnet, dass** die Signalverarbeitungseinheit einen einzigen Modulator (61) zum Modulieren von Datensignalen im Grundband, die an jede Frequenzumsetzungsstufe in einer Sendebetriebsart der Vorrichtung gesendet werden, umfasst und dass die Oszillatorstufe (5) in einer Sendebetriebsart wenigstens ein drittes oszillierendes Signal (S_{O13}, S_{O14}) an die erste Frequenzumsetzungsstufe und wenigstens ein viertes oszillierendes Signal (S_{O23}, S_{O24}) an die zweite Frequenzumsetzungsstufe liefert, um die Frequenz der Datensignale anzuheben, um die Hochfrequenzsignale mit einer ersten Frequenz (RF1) mittels der ersten Antenne zu übertragen und um die Hochfrequenzsignale mit einer zweiten Frequenz (RF2) mittels der zweiten Antenne zu übertragen.

7. Empfangsvorrichtung nach Anspruch 1, **dadurch gekennzeichnet, dass** alle Komponenten der Vorrichtung in eine einzige integrierte Schaltung mit Halbleitersubstrat integriert sind.

8. Verfahren zum Betreiben der Empfangsvorrichtung nach Anspruch 1, **dadurch gekennzeichnet, dass** das Verfahren eine Reihe von Schritten umfasst, die darin bestehen:
a) die zwei Frequenzumsetzungsstufen (2, 3) zu starten, damit die erste Umsetzungsstufe Hochfrequenz-Datensignale mit einer ersten Trägerfrequenz (RF1) in erste Zwischensignale (S_{IF1}) umsetzen kann und damit die zweite Umsetzungsstufe Hochfrequenz-Datensignale mit einer von der ersten Trägerfrequenz verschiedenen zweiten Trägerfrequenz (RF2) in zweite Zwischensignale (S_{IF2}) mit einer Frequenz, die zu jener der ersten Zwischensignale äquivalent ist, umsetzen kann,
b) in einem Addiererelement (41) der einzigen Kanalauswahleinheit erste und zweite Zwischensignale, die von der ersten bzw. der zweiten Frequenzumsetzungsstufe geliefert werden, zu addieren,
c) das Intensitätsniveau der Zwischensignale durch einen Signalintensitätsindikator zu steuern und
d) die zwei Frequenzumsetzungsstufen in eine momentane Ruhebetriebsart zu versetzen, falls das gesteuerte Intensitätsniveau niedriger als ein Referenzintensitätsniveau ist, oder
e) eine der Frequenzumsetzungsstufen, die in eine Arbeitsbetriebsart zu versetzen oder in ihr zu halten ist, auszuwählen, falls das gesteuerte Intensitätsniveau größer oder gleich dem Referenzintensitätsniveau ist, um eine Demodulation in der Verarbeitungseinheit der von der Kanalauswahleinheit gelieferten Datensignale zu ermöglichen.

9. Verfahren nach Anspruch 8, **dadurch gekennzeichnet, dass** die Schritte a) bis d) automatisch und aufeinander folgend in bestimmten Zeitintervallen wiederholt werden, bis das durch den Intensitätsindikator gesteuerte Intensitätsniveau am Ausgang des Addierers gleich oder größer als das Referenzintensitätsniveau ist.

10. Verfahren nach Anspruch 8, **dadurch gekennzeichnet, dass** zwischen dem Schritt c) und dem Schritt e) in dem Fall, in dem die erste Steuerung des Intensitätsniveaus durch den Intensitätsindikator gleich oder größer als das Referenzintensitätsniveau ist, die erste und die zweite Frequenzumsetzungsstufe nacheinander gestartet werden, damit der Intensitätsindikator eine zweite Steuerung des Intensitätsniveaus der ersten und der zweiten Zwischensignale getrennt am Ausgang des Addiererelements in der Weise ausführt, dass die Verarbeitungseinheit die Frequenzumsetzungsstufe auswählen kann, die die Zwischensignale mit der stärksten Intensität erzeugt hat.
